# EUROPÄISCHE PATENTSCHRIFT

(11) **EP 4 246 110 B1**
(45) Veröffentlichungstag und Bekanntmachung des Hinweises auf die Patenterteilung: **29.04.2026**
(21) Anmeldenummer: 23153770.5
(22) Anmeldetag: 27.01.2023
(51) Int. Cl.: G01L 1/14, G01L 9/00

(54) **KAPAZITIVER DRUCKSENSOR**
CAPACITIVE PRESSURE SENSOR
CAPTEUR DE PRESSION CAPACITIF

(30) Priorität: 16.03.2022 DE 102022202617
(43) Veröffentlichungstag der Anmeldung: 20.09.2023
(73) Patentinhaber: ContiTech Deutschland GmbH, 30175 Hannover (DE)
(72) Erfinder: Schleuniger, Juerg, 30165 Hannover (DE); Kneer, Janosch, 30165 Hannover (DE)
(74) Vertreter: Preusser, Andrea

(56) Entgegenhaltungen:
- CN-A- 112 649 128
- CN-A- 113 551 811
- KR-A- 20220 029 969
- WANG LEI ET AL: "Enhanced performance of 17.7 GHz SAW devices based on AlN/diamond/Si layered structure with embedded nanotransducer", APPLIED PHYSICS LETTERS, AMERICAN INSTITUTE OF PHYSICS, 2 HUNTINGTON QUADRANGLE, MELVILLE, NY 11747, vol. 111, no. 25, 19 December 2017 (2017-12-19), XP012224712, ISSN: 0003-6951, [retrieved on 20171219], DOI: 10.1063/1.5006884
- UNIGARRO EDGAR A ET AL: "Design and implementation of a planar capacitive pressure sensor", 2014 IEEE 9TH IBEROAMERICAN CONGRESS ON SENSORS, IEEE, 15 October 2014 (2014-10-15), pages 1 - 3, XP032713499, DOI: 10.1109/IBERSENSOR.2014.6995536

## Beschreibung

Die vorliegende Erfindung betrifft einen auf gedruckten Elektroden basierenden kapazitiven Drucksensor insbesondere für die Druckerfassung in Batteriemodulen.

Batteriemodule, wie sie beispielsweise in New Energy Vehicles eingesetzt werden, weisen üblicherweise mehrere dicht aneinandergereihte und/oder gestapelte Batteriezellen auf, in denen Elektroden in einem festen oder gelartigen Elektrolyten eingetaucht sind. Im Zusammenhang mit dem Be- und Entladevorgang treten bei Batteriezellen kleinere Änderungen des Volumens auf, die z.B. auf die Einlagerung von Ionen in die Elektroden zurückzuführen sind. Diese Volumenänderung führen wiederum zu Änderungen des internen Batteriezellendrucks. Weiterhin können z.B. in Lithium-Ionen-Batteriezellen stattfindende Abbauprozesse, die von einer Gasentwicklung begleitet werden, zu einer Erhöhung des internen Batteriezellendruck führen. Eine übermäßige Erhöhung des Batteriezellendrucks kann insbesondere bei Pouch-Zellen, d.h. mittels einer flexiblen Außenfolie gekapselten Batteriezellen, zu ernsthaften Defekten und im schlimmsten Fall zu einem Brand führen.

Um über den gesamten Lebenszyklus der Batterie einen einwandfreien und sicheren Betrieb zu gewährleisten, ist es wünschenswert, eine Überwachung des Batteriezellendrucks einzurichten. Da eine gravierende Druckänderung potenziell in jeder einzelnen Batteriezelle auftreten kann, wäre es hierbei vorteilhaft, wenn die entsprechenden Sensoren derart implementiert werden könnten, dass eine Überwachung einer Vielzahl von Batteriezellen, bevorzugt jeder einzelnen Batteriezelle im Batteriemodul, möglich ist.

Aufgrund des beträchtlich eingeschränkten Bauraums zwischen den dicht zusammengepackten Batteriezellen ist ein besonders kompakter und leichter Aufbau der Drucksensoren nötig. Gleichzeitig muss eine ausreichende Empfindlichkeit des Drucksensors gewährleistet werden. Hier stoßen herkömmliche derzeit am Markt erhältliche Sensoren an ihre Grenzen.

Beispielsweise SMD-basierte Drucksensoren sind in diesem Zusammenhang als ungeeignet zu erachten, da eine ausreichende Empfindlichkeit nur mit einem vergleichsweise sperrigen Sensoraufbau zu erreichen wäre. Weiterhin sind resistive Drucksensoren bekannt, die zwar z.B. in Streifenform und somit relativ kompakt ausgeführt werden können. Allerdings sind derartige Sensoren aufgrund ihrer Anfälligkeit für Drift nicht ausreichend zuverlässig. Dokument CN 112 649 128 A (UNIV EAST CHINA SCIENCE & TECH) 13. April 2021 (2021-04-13) offenbart ein Beispiel für eine Messvorrichtung und ein Verfahren zum Erfassen dreidimensionaler Kontaktbelastungen unter Verwendung von Interdigital-Kondensatoreinheiten.

Dokument CN 113 551 811 A (UNIV JILIN) 26. Oktober 2021 (2021-10-26) beschreibt ein Konstruktionsverfahren für einen 4D-gedruckten multifunktionalen taktilen Sensor.

Eine Aufgabe der vorliegenden Erfindung ist es, einen besonders kompakten und gleichzeitig empfindlichen Drucksensor bereitzustellen. Insbesondere soll ein Drucksensor bereitgestellt werden, der in Batteriemodulen mit dicht zusammengepackten Batteriezellen eine leicht zu implementierende und zuverlässige Überwachung des Batteriezellendrucks ermöglicht. Zumindest soll eine Alternative zu bekannten Drucksensoren bereitgestellt werden.

Die Aufgabe wird durch einen Drucksensor mit den Merkmalen des Anspruchs 1, ein Batteriemodul mit den Merkmalen des Anspruchs 6 sowie ein Verfahren mit den Merkmalen des Anspruchs 7 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Der erfindungsgemäße Drucksensor ist ein kapazitiver Drucksensor mit einer flexiblen Trägerschicht und einer auf der Trägerschicht angeordneten Sensorschicht. Innerhalb der Sensorschicht ist eine Interdigitalelektrode mit zwei auf die Trägerschicht aufgedruckten und kammartig ineinandergreifenden Elektroden angeordnet. Innerhalb der Sensorschicht ist zwischen den Elektroden ein druckempfindliches Material angeordnet, das aus einem kompressiblen dielektrischen Material gebildet ist, das isoliert zueinander angeordnete Partikel mit anderer Permittivität als das dielektrische Material und/oder Cluster derartiger Partikel enthält und/oder Cluster derartiger Partikel enthält. Zum Schutz der Elektroden ist auf der Sensorschicht eine Deckschicht angeordnet. Insbesondere weisen die Partikel eine deutlich größere Permittivität oder eine deutlich kleinere Permittivität auf als das dielektrische Material.

Die kammartig ineinandergreifenden Elektroden sind innerhalb derselben Schicht angeordnet, wobei sich ihre jeweiligen "Kammzinken" entlang der Schichtebene erstrecken. Die sich gegenüberliegenden leitfähigen Flächen der Elektroden sind entlang der Schichtebene voneinander beabstandet und bieten so einen innerhalb der Schicht liegenden Zwischenraum für das druckempfindliche Material. Wird die Sensorschicht mit Druck beaufschlagt, führt dies zu einer elastischen Verformung des druckempfindlichen Materials. Hierdurch verändern sich die Abstände zwischen den isoliert zueinander angeordneten Partikeln. Dadurch, dass die Partikel eine insbesondere deutlich andere Permittivität aufweisen als das dielektrische Material, d.h. eine wesentlich größere oder wesentlich kleinere Permittivität aufweisen als das dielektrische Material, bewirkt eine Änderung der Abstände der Partikel bzw. Cluster zueinander eine Änderung der Permittivität des druckempfindlichen Materials, die als Kapazitätsänderung messbar ist.

Ein Vorteil des erfindungsgemäßen Sensors ist, dass die für die Kapazitätsmessung notwendigen Komponenten innerhalb derselben Schicht angeordnet werden können, was einen besonders flachen und kompakten Aufbau des Sensors ermöglicht.

Ein weiterer Vorteil des erfindungsgemäßen Sensors ist, dass auch mit kompakten Sensorgeometrien eine hohe Empfindlichkeit des Sensors erreicht wird, da die Änderung der Permittivität des druckempfindlichen Materials wesentlich von der ausgeprägt druckabhängigen Abstandsänderung zwischen den darin enthaltenen Partikeln beeinflusst wird.

Ein weiterer Vorteil des erfindungsgemäßen Sensors ist, dass dieser sich aufgrund seines simplen Aufbaus in einfacher Weise automatisiert in hoher Stückzahl produzieren lässt. Ferner lassen sich auf Basis des erfindungsgemäßen Sensors leicht Sensorarrays herstellen, beispielsweise indem mehrere erfindungsgemäße Sensoren auf einer gemeinsamen Trägerschicht aufgedruckt werden. Insbesondere eignet sich der erfindungsgemäße Sensor hervorragend für die Überwachung des Batteriezellendrucks, da der Sensor auch zwischen dicht zusammengepackten Batteriezellen problemlos angeordnet werden kann, um Änderungen des Drucks zuverlässig zu erkennen. Insbesondere eignet sich der erfindungsgemäße Sensor ausgezeichnet für Nachrüstlösungen.

Für die Trägerschicht kommen grundsätzlich verschiedene Materialien in Betracht, sofern sie nicht leitfähig und flexibel sind. Vorzugsweise ist das Material der Trägerschicht ausgewählt aus der Gruppe bestehend aus Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas und / oder Cellulose und / oder Papier und / oder Basalt und / oder Metall und / oder Carbon und / oder Keramik und / oder Kohlenstoff und / oder Wolle und / oder Baumwolle und / oder Polypropylen und / oder Melamin und / oder modifizierte Viskose und / oder Gestein und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere. Handelt es sich bei dem Material der Trägerschicht um ein thermoplastisches Polymer, so findet bevorzugt Polyethylenterephthalat (PET) Verwendung. PET ist im Vergleich zu anderen Substraten besonders kostengünstig und weist sehr gute Eigenschaften (wie Temperaturstabilität, Oberflächenbeschaffenheit, Oberflächenenergie, etc.) auf.

In einer bevorzugten Ausgestaltung der Erfindung umfasst das Material der Trägerschicht zumindest einen anorganischen nichtmetallischen Werkstoff, wie Keramik oder Glas, sofern dieser in einer die Flexibilität nicht beeinträchtigenden geringen Schichtdicke ausgeführt wird. In einer weiteren bevorzugten Ausgestaltung der Erfindung umfasst das Material der Trägerschicht zumindest einen Faserwerkstoff, wie Papier.

Insbesondere weist die Trägerschicht eine Schichtdicke von 1 µm bis 150 µm, bevorzugt von 1 µm bis 125 µm, besonders bevorzugt von 1 µm bis 50 µm, auf. Auf diese Weise kann eine besonders kompakte Ausgestaltung des Sensors realisiert werden. Gleichzeitig kann das Gewicht des erfindungsgemäßen Sensors geringgehalten werden.

Vorzugsweise weist das Material der Trägerschicht eine Dichte von weniger als 1,5 g/cm³, bevorzugt kleiner gleich 1 g/cm³, auf. Hierdurch kann das Gewicht des erfindungsgemäßen Sensors geringgehalten werden.

In einer weiteren bevorzugten Ausgestaltung der Erfindung bildet eine flexible Außenhülle einer Batteriezelle die Trägerschicht aus. Zur Vervollständigung des Drucksensors können in diesem Fall die Sensorschicht und die Deckschickt unmittelbar auf der Batteriezelle hergestellt werden. Auf diese Weise kann eine separate Trägerschicht eingespart werden.

Für die Elektroden kommen grundsätzlich verschiedene anorganische Materialien (wie z.B. Metalle) und organische Materialien (wie z.B. leitfähige Polymere, Carbon, Graphit, Graphen etc.) in Betracht, sofern sie leitfähig sind und sich (z.B. als Tinte) mittels Druckverfahren verarbeiten lassen. Vorzugsweise beträgt die Dicke der Elektroden 1 nm bis 10 µm. Auf diese Weise kann eine besonders kompakte Ausgestaltung des Sensors realisiert werden. Besonders bevorzugt beträgt die Dicke der Elektroden 1 nm bis 500 nm, so dass die Elektroden mittels bewährter Druckverfahren prozesssicher herstellt werden können. Als Dicke der Elektroden wird hierbei die quer zur Schichtebene gemessene Abmessung der Elektroden gemessen. Vorzugsweise ist die Schichtdicke der Sensorschicht identisch mit der Dicke der Elektroden.

Das druckempfindliche Material ist aus einem dielektrischen Material gebildet, das isoliert zueinander angeordnete Partikel und/oder Cluster enthält, die eine deutlich andere Permittivität aufweisen wie das dielektrische Material. Insbesondere sind die Partikel und/oder Cluster leitfähig. Als dielektrisches Material kommen grundsätzlich verschiedene Materialien in Betracht, sofern sie nicht leitfähig, dafür komprimierbar und elastisch verformbar sind. Insbesondere lässt sich das dielektrische Material mittels Druckverfahren verarbeiten, und ist zumindest in ausgehärtetem Zustand nicht leitfähig, dafür komprimierbar und elastisch verformbar. Vorzugsweise umfasst das dielektrische Material ein chemisch-vernetzbares (z.B. UV-vernetzbares) Bindemittel oder ein lösemittelbasiertes Bindemittel. Als dielektrisches Material kann beispielsweise Polyester, Epoxidharz, Silikone, Acrylate oder Polyurethan verwendet werden.

Wenn die in dem dielektrischen Material vorhandenen Partikel bzw. Cluster von Partikeln selbst elektrisch leitfähig sind, sind sie jedoch innerhalb des dielektrischen Materials derart zueinander beabstandet angeordnet, dass dielektrische Material nicht leitfähig bleibt. Vorzugsweise enthalten die leitfähigen Partikel ein Metall, bevorzugt Silber, Kupfer und/oder Eisen.

Insbesondere sind die Partikel Nanopartikel, d.h. die Partikel weisen Größen im Bereich 1 nm bis weniger als 1 µm auf (Sub-µ-Bereich). Bevorzugt weisen die Partikel Größen im Bereich 1 nm bis 50 nm auf.

Die Permittivität und die Größe der Partikel sowie deren Anteil in dem dielektrischen Material sind dem jeweiligen Anwendungsfall anzupassen. Es ist ersichtlich, dass einerseits eine ausreichende Empfindlichkeit des Sensors und andererseits eine ausreichend hohe Durchschlagspannung sichergestellt werden muss. Insbesondere berühren sich voneinander isoliert angeordnete Partikel auch dann nicht, wenn das druckempfindliche Material mit Druck beaufschlagt wird. Weiterhin ist ersichtlich, dass die Größe der Partikel in angemessenem Verhältnis zur Dicke der Elektroden stehen muss, da der Platz für das druckempfindliche Material von den sich gegenüberliegenden leitfähigen Flächen der Elektroden begrenzt wird. Insbesondere ist die Größe der Partikel zumindest um einen Faktor 10, bevorzugt zumindest um einen Faktor 20, kleiner als die Dicke der Elektroden.

Für die Deckschicht zum Schutz der Elektroden kommen grundsätzlich verschiedene Materialien in Betracht, sofern sie nicht leitfähig und ausreichend undurchlässig für z.B. Sauerstoff und/oder Feuchtigkeit sind. Beispielsweise kann ein vernetzbarer oder Lösemittel-basierter Lack oder ein Folienlaminat, bestehend aus einer geeigneten Folie sowie einer Haftschicht (chemisch-vernetzbare Schicht oder PSA-Kleber), z.B. PET-Folie, als Deckschicht verwendet werden. Eine Lackschicht kann hierbei besonders dünn und mittels Druckverfahren besonders effizient und prozesssicher realisiert werden. Vorzugsweise beträgt die Schichtdicke der Deckschicht 1 µm bis 800 µm, bevorzugt 1 µm bis 100 µm, besonders bevorzugt 1 µm bis 10 µm.

In einer weiteren bevorzugten Ausgestaltung der Erfindung enthält die Deckschicht das druckempfindliche Material. Auf diese Weise trägt die Deckschicht nicht nur zum Schutz der Elektroden, sondern auch zur Erhöhung der Empfindlichkeit des Sensors bei. Denn zum einen wird bei einem auf den Sensor ausgeübten Druck das in der Deckschicht befindliche druckempfindliche Material verformt und zumindest teilweise in den Zwischenraum zwischen den sich gegenüberliegenden leitfähigen Flächen der Elektroden gedrückt, so dass es dort zu einer verstärkten Änderung der Permittivität kommt. Gleichzeitig kann durch die Anordnung von druckempfindlichem Material auch in Randbereichen der sich gegenüberliegenden leitfähigen Flächen der Elektroden eine druckabhängige Änderung der Permittivität weiter verstärkt werden. Insbesondere besteht die Deckschicht aus dem druckempfindlichen Material, was den Sensoraufbau und die Herstellung des Sensors erheblich vereinfacht. Obwohl die das druckempfindliche Material enthaltene oder daraus besehende Deckschicht in vielen Fällen einen ausreichenden Schutz bieten sollte, kann es in einigen Anwendungen zweckmäßig sein, auf die Deckschicht eine separate Schutzschicht, z.B. ein UV-vernetzbarer Lack oder ein Folienlaminat (z.B. PET-Folie), aufzutragen.

Gemäss der Erfindung weist die Trägerschicht auf einer der Sensorschicht zugewandten Seite in einem nicht an die Elektroden angrenzenden Bereich eine oder mehrere Vertiefungen auf, in der bzw. in denen das druckempfindliche Material angeordnet ist. Auf diese Weise wird die Empfindlichkeit des Sensors weiter erhöht, da durch die Anordnung von druckempfindlichem Material auch in Randbereichen der sich gegenüberliegenden leitfähigen Flächen der Elektroden eine druckabhängige Änderung der Permittivität weiter verstärkt wird. Insbesondere grenzt das druckempfindliche Material in der bzw. den Vertiefungen dabei, vorzugsweise nahtlos, an das druckempfindliche Material in der Sensorschicht an. Die Vertiefungen können beispielsweise mittels Ablation von Bereichen der Trägerschicht, insbesondere mittels Laserablation oder durch Verformung, insbesondere durch Prägung, hergestellt sein.

Gegenstand der Erfindung ist auch ein Batteriemodul mit einer Batteriezelle, insbesondere einer Pouch-Zelle, und einem kapazitiven Drucksensor nach einem der Ansprüche 1 bis 5, der zur Überwachung eines Batteriezellendrucks der Batteriezelle ausgebildet und eingerichtet ist. Auf diese Weise wird ein Batteriemodul bereitgestellt, dessen Zustand anhand des ermittelten Batteriezellendrucks zuverlässig und sicher bestimmt wird. Dadurch ist es möglich, beispielsweise einen Defekt oder die Gefahr eines Brandes rechtzeitig zu erkennen. Bei der Implementierung der Drucküberwachung bietet der erfindungsgemäße Drucksensor die vor- und nachbeschriebenen Vorteile.

In einer bevorzugten Ausgestaltung der Erfindung ist der Drucksensor an einer Außenhülle der Batteriezelle angeordnet ist. Hierdurch kann der Druck optimal ermittelt werden, wobei die Integrität der Batteriezelle nicht beeinträchtigt wird. Der Drucksensor kann zwischen der Außenhülle der Batteriezelle und einer Wandung des Batteriemoduls oder zwischen zwei benachbarten Batteriezellen des Batteriemoduls angeordnet werden.

In einer weiteren bevorzugten Ausgestaltung der Erfindung bildet die flexible Außenhülle der Batteriezelle die Trägerschicht aus. Zur Vervollständigung des Drucksensors können in diesem Fall die Sensorschicht und die Deckschickt unmittelbar auf der Batteriezelle hergestellt werden. Auf diese Weise kann eine separate Trägerschicht eingespart werden, so dass der Drucksensor noch weniger Bauraum benötigt.

Das Erfindungsgemäße Batteriemodul kann vorzugsweise in ein Kraftfahrzeug, insbesondere ein New Energy Vehicle, verbaut werden. Somit wird ein Kraftfahrzeug mit einem Batteriemodul bereitgestellt, dessen Zustand anhand des ermittelten Batteriezellendrucks zuverlässig und sicher bestimmt wird. Dadurch ist es möglich, beispielsweise einen Defekt oder die Gefahr eines Brandes rechtzeitig zu erkennen.

Gemäß dem bereits vor- sowie dem weiter unten nachbeschriebenen wird die eingangs gestellte Aufgabe auch durch ein Verfahren mit den Merkmalen des Anspruch 7 gelöst.

Das erfindungsgemäße Verfahren zur Herstellung eines kapazitiven Drucksensors, insbesondere eines Drucksensors nach einem der Ansprüche 1 bis 4, umfasst folgende Schritte:
- Aufdrucken zweier kammartig ineinandergreifender Elektroden auf eine Trägerschicht;
- Auftragen, insbesondere Aufdrucken, eines druckempfindlichen Materials, das aus einem dielektrischen Material gebildet ist, das isoliert zueinander angeordnete Partikel mit anderer Permittivität als das dielektrische Material und/oder Cluster derartiger Partikel enthält, auf die Trägerschicht zwischen die Elektroden;
- Herstellen einer Deckschicht.

Die vorbeschriebenen Eigenschaften der Bestandteile des erfindungsgemäßen Sensors (Trägerschicht, Elektroden, druckempfindliches Material, Deckschicht, etc.) und deren Vorteile sind entsprechend auch für das erfindungsgemäße Verfahren anwendbar und werden deshalb nicht noch einmal wiederholt.

Das erfindungsgemäße Verfahren bietet eine besonders einfache, schnelle und kostengünstige Möglichkeit, einen kompakten Drucksensor mit hoher Empfindlichkeit bereitzustellen. Vorzugsweise werden Elektroden und das druckempfindliche Material mit Druckverfahren aufgedruckt, was eine kostengünstige Umsetzung des Verfahrens ermöglicht.

In einer bevorzugten Ausgestaltung der Erfindung ist das Herstellen der Deckschicht ein Auftragen weiteren druckempfindlichen Materials auf die Elektroden und das zwischen den Elektroden angeordnete druckempfindliche Material. Auf diese Weise können das Auftragen des druckempfindlichen Materials zwischen die Elektroden und das Herstellen der Deckschicht zu einem Schritt zusammengefasst werden, wodurch sich das Verfahren wesentlich effizienter umsetzen lässt. Beispielsweise muss mit der Herstellung der Deckschicht nicht gewartet werden, bis das druckempfindliche Material ausgehärtet ist.

In einer weiteren bevorzugten Ausgestaltung der Erfindung wird vor dem Auftragen des druckempfindlichen Materials auf die Trägerschicht ein nicht an die Elektroden angrenzender Bereich auf einer den Elektroden zugewandten Seite der Trägerschicht zur Ausbildung einer oder mehrerer Vertiefungen teilweise abgetragen, vorzugsweise laser-ablatiert, oder verformt, vorzugsweise geprägt. Auf diese Weise werden beim Auftragen des druckempfindlichen Materials auf die Trägerschicht nicht nur die Zwischenräume zwischen den sich gegenüberliegenden leitfähigen Flächen der Elektroden, sondern auch die Vertiefungen mit druckempfindlichem Material gefüllt, wodurch - wie bereits erörtert - ein Drucksensor mit verbesserter Empfindlichkeit herstellbar ist. Die Laserablation bietet hierbei eine einfach umsetzbare Möglichkeit, die gewünschten Vertiefungen herzustellen, da auch bei großflächiger Bearbeitung der Trägerschicht samt darauf gedruckter Elektroden letztere von dem Laser nicht oder nur geringfügig abgetragen werden. Die Prägung, insbesondere wenn sie mittels Rollen umgesetzt wird, bietet eine effektive Möglichkeit, die gewünschten Vertiefungen in besonders kurzer Zeit herzustellen. Der Prägestempel kann beispielsweise derart ausgebildet sein, dass er Ausnehmungen für die Elektroden und Fortsätze für die Vertiefungen aufweist.

Insgesamt wird mit der vorliegenden Erfindung ein kompakter Drucksensor mit einer hohen Empfindlichkeit bereitgestellt, der sich für eine Vielzahl von Anwendungen eignet. Insbesondere wird ein vielseitiger Drucksensor bereitgestellt, der trotz seiner geringen Abmessungen (Gesamtdicke von weniger als 1 mm) eine hohe Empfindlichkeit aufweist.

Zudem kann der Drucksensor mit kompakten, flachen und insbesondere gedruckten Temperatursensoren kombiniert werden. Dies erlaubt eine noch aussagekräftigere Überwachung des Batteriezustands, wie z.B. eine lokale Temperaturerhöhung durch eine defekte Zelle.

Als Temperatursensor können alle bekannten Arten und Messprinzipen angewendet werden, die sich in einer flachen und flexiblen Bauform realisieren (z.B. drucken) lassen, wie zum Beispiel resistive Temperatursensoren (sowohl mit positiver (PTC) und auch negativer (NTC) Widerstandsänderung), Thermoelemente, etc.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform eines nicht erfindungsgemäßen Drucksensors in einer Schnittansicht;
- Fig. 2: eine weitere Ausführungsform eines nicht erfindungsgemäßenDrucksensors in einer Schnittansicht;
- Fig. 3: eine weitere Ausführungsform eines erfindungsgemäßen Drucksensors in einer Schnittansicht und
- Fig. 4: den prinzipiellen Aufbau einer auf eine Trägerschicht aufgedruckten Interdigitalelektrode.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

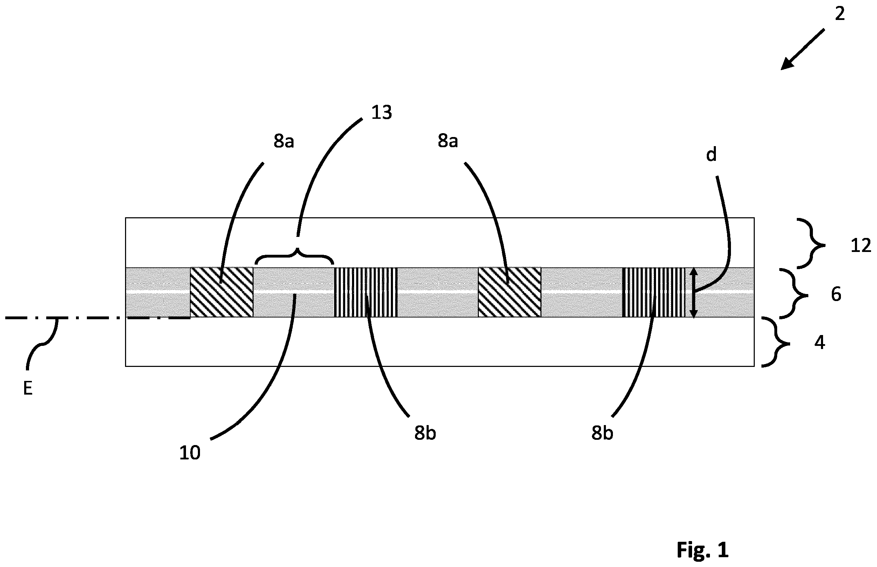

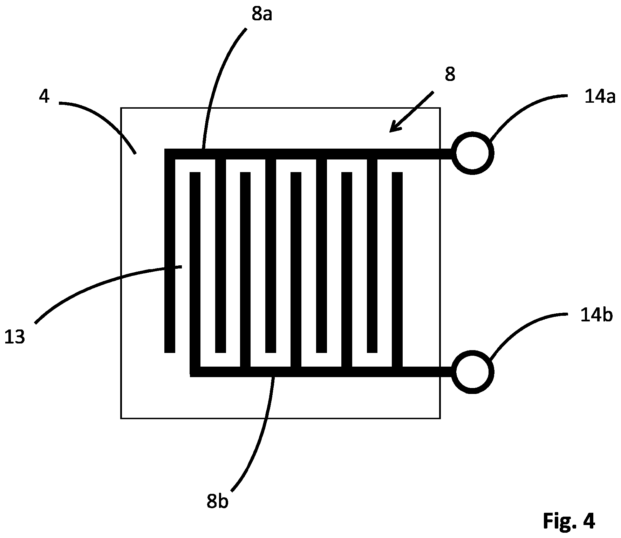

Figuren 1 bis 3 zeigen verschiedene Ausführungsformen eines kapazitiven Drucksensors 2. Der Drucksensor 2 weist eine flexible Trägerschicht 4 und eine darauf angeordnete Sensorschicht 6 auf. Innerhalb der Sensorschicht 6 ist eine Interdigitalelektrode 8 angeordnet. Die Interdigitalelektrode 8 weist dabei zwei auf die Trägerschicht 4 aufgedruckte und kammartig ineinandergreifende Elektroden 8a, 8b auf. Die einzelnen "Kammerzinken" der Elektroden 8a, 8b erstrecken sich entlang einer gedachten Schichtebene E. Der prinzipielle Aufbau der Interdigitalelektrode ist in Fig. 4 gezeigt. Die Schichtebene E verläuft in den Figuren 1 bis 3 senkrecht und in der Figur 4 parallel zur jeweiligen Figurenebene. Eine quer zur Schichtebene E gemessene Dicke d der Elektroden 8a, 8b ist dabei identisch mit der Schichtdicke der Sensorschicht 6. Innerhalb der Sensorschicht 6 ist zwischen den Elektroden 8a, 8 ein druckempfindliches Material 10 angeordnet, das aus einem kompressiblen dielektrischen Material gebildet ist, das isoliert zueinander angeordnete Partikel mit anderer Permittivität als das dielektrische Material, beispielsweise leitfähige Partikel, und/oder Cluster derartiger Partikel enthält. Zum Schutz der Elektroden 8a, 8b vor äußeren Einflüssen ist auf der Sensorschicht 6 eine Deckschicht 12 angeordnet.

Die sich gegenüberliegenden leitfähigen Flächen der Elektroden 8a, 8b sind entlang der Schichtebene E voneinander beabstandet und bieten so einen innerhalb der Sensorschicht 6 liegenden Zwischenraum 13, in dem sich das druckempfindliche Material 10 befindet. Mit Blick auf den in Fig. 4 gezeigten prinzipiellen Aufbau der Interdigitalelektrode 8 erstreckt sich der Zwischenraum 13 dabei mäanderförmig zwischen den beiden Elektroden 8a, 8b. Wird der Drucksensor 2 mit Druck beaufschlagt, wird die Sensorschicht 6 und damit das druckempfindliche Material 10 komprimiert. Hierdurch verändern sich die Abstände zwischen den isoliert zueinander angeordneten Partikeln in dem druckempfindlichen Material 10, was eine Änderung der Permittivität des druckempfindlichen Materials 10 nach sich zieht. Diese Permittivitätsänderung ist als Kapazitätsänderung messbar.

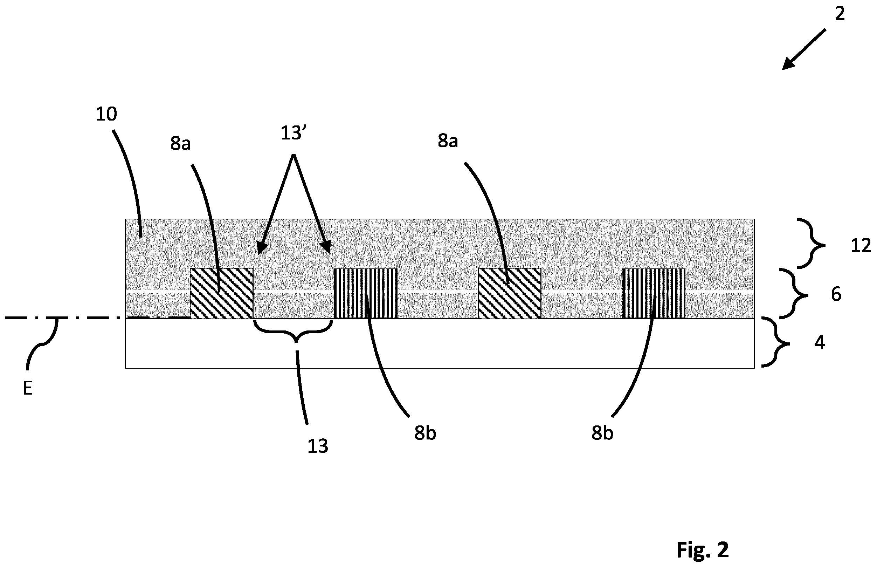

Fig. 2 zeigt eine weitere Ausführungsform eines nicht erfindungsgemäßen Drucksensors 2, die sich von der in Fig. 1 gezeigten nicht erfindungsgemäßen Ausführungsform dadurch unterscheidet, dass die Deckschicht 12 aus dem druckempfindlichen Material 10 besteht. Auf diese Weise trägt die Deckschicht 12 nicht nur zum Schutz der Elektroden 8a, 8b, sondern auch zur Erhöhung der Empfindlichkeit des Drucksensors 2 bei. Denn zum einen wird bei einem auf den Drucksensor 2 ausgeübten Druck das in der Deckschicht 12 befindliche druckempfindliche Material 10 verformt und zumindest teilweise in den Zwischenraum 13 zwischen den sich gegenüberliegenden leitfähigen Flächen der Elektroden 8a, 8b gedrückt, so dass es dort zu einer verstärkten Änderung der Permittivität kommt. Gleichzeitig kann durch die Anordnung von druckempfindlichem Material auch in deckschichtseitigen Randbereichen 13' der sich gegenüberliegenden leitfähigen Flächen der Elektroden 8a, 8b eine druckabhängige Änderung der Permittivität weiter verstärkt werden.

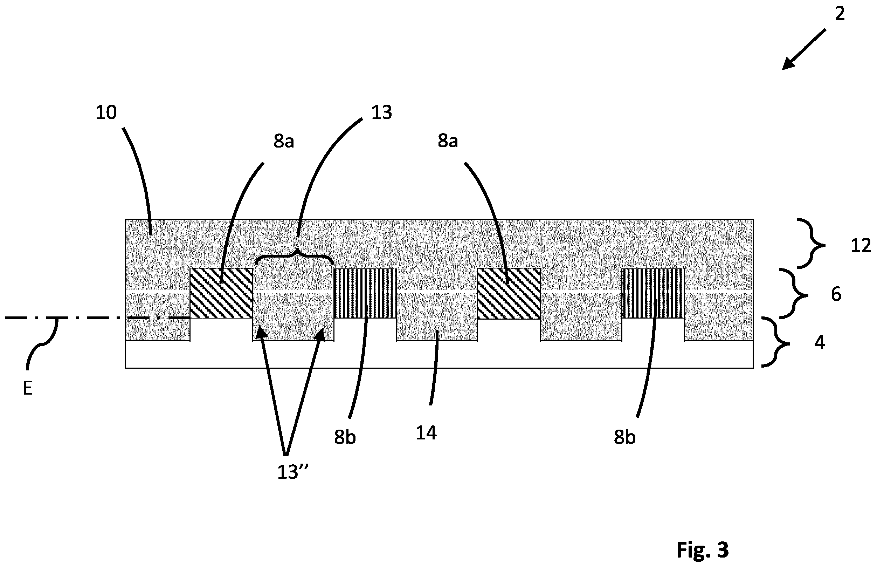

Fig. 3 zeigt eine weitere Ausführungsform des erfindungsgemäßen Drucksensors 2, die sich von der in Fig. 2 gezeigten nicht erfindungsgemäßen Ausführungsform dadurch unterscheidet, dass die Trägerschicht 4 auf einer der Sensorschicht 6 zugewandten Seite in einem nicht an die Elektroden 8a, 8b angrenzenden Bereich eine Vertiefung 14 aufweist, in der das druckempfindliche Material 10 angeordnet ist. Die Vertiefung 14 folgt dabei dem mäanderförmigen Verlauf des darüberliegenden Zwischenraums 13. Das druckempfindliche Material 10 in der Vertiefung 14 grenzt dabei nahtlos an das druckempfindliche Material 10 in der Sensorschicht 6 an. In anderen Worten ragt druckempfindliches Material 10 in die Vertiefungen 14 hinein. Auf diese Weise wird die Empfindlichkeit des Drucksensors 2 noch weiter erhöht, da durch die Anordnung von druckempfindlichem Material 10 auch in weiteren trägerschichtseitigen Randbereichen 13" der sich gegenüberliegenden leitfähigen Flächen der Elektroden 8a, 8b eine druckabhängige Änderung der Permittivität verstärkt wird. Die Vertiefung 14 kann dabei in einfacher Weise mittels Abtragung, bevorzugt Laserablation oder Verformung, bevorzugt Prägung, von Bereichen der Trägerschicht 4 hergestellt sein.

Fig. 4 zeigt den prinzipiellen Aufbau einer Interdigitalelektrode 8, wie sie in den vorstehend gezeigten Ausführungsformen der Figuren 1 bis 3 verwendet werden kann. Ersichtlich umfasst die Interdigitalelektrode 8 zwei einzeln über den jeweiligen Kontakt 14a, 14b ansteuerbare bzw. auslesbare Elektroden 8a, 8b.

Im Sinne der vorliegenden Anmeldung sind die Wörter "ein" bzw. "eine" nicht als Zahlwörter, sondern als unbestimmte Artikel auszulegen. Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Sofern ein Merkmal auf eine bestimmte Anzahl gerichtet ist, ist dies durch eine entsprechende Formulierung, wie z.B. "genau ein" bzw. "ein einziges", gekennzeichnet.

### Bezugszeichenliste (Teil der Beschreibung)

| | |
|---|---|
| Kapazitiver Drucksensor | 2 |
| Flexible Trägerschicht | 4 |
| Sensorschicht | 6 |
| Interdigitalelektrode | 8 |
| Elektroden | 8a, 8b |
| druckempfindliches Material | 10 |
| Deckschicht | 12 |
| Zwischenraum | 13 |
| Deckschichtseitige Randbereiche | 13' |
| Trägerschichtseitige Randbereiche | 13" |
| Kontakte | 14a, 14b |
| Schichtebene | E |
| Dicke der Elektroden | d |

## Patentansprüche

1. Kapazitiver Drucksensor (2) mit
einer flexiblen Trägerschicht (4),
einer auf der Trägerschicht (4) angeordneten Sensorschicht (6),
wobei innerhalb der Sensorschicht (6) eine Interdigitalelektrode (8) angeordnet ist,
die zwei auf die Trägerschicht (4) aufgedruckte und kammartig ineinandergreifende Elektroden (8a, 8b) aufweist,
wobei innerhalb der Sensorschicht (6) zwischen den Elektroden (8a, 8) ein druckempfindliches Material (10) angeordnet ist,
das aus einem kompressiblen dielektrischen Material gebildet ist,
das isoliert zueinander angeordnete Partikel mit anderer Permittivität als das dielektrische Material und/oder Cluster derartiger Partikel enthält, und einer auf der Sensorschicht (6) angeordneten Deckschicht (12) zum Schutz der Elektroden (8a, 8b),
**dadurch gekennzeichnet, dass**
die Trägerschicht (4) auf einer der Sensorschicht (6) zugewandten Seite in einem nicht an die Elektroden (8a, 8b) angrenzenden Bereich eine oder mehrere Vertiefungen (14) aufweist, in der bzw. in denen das druckempfindliche Material (10) angeordnet ist.

2. Kapazitiver Drucksensor (2) nach Anspruch 1, wobei die Partikel leitfähig sind, vorzugsweise ein Metall, bevorzugt Silber, Kupfer und/oder Eisen enthalten.

3. Kapazitiver Drucksensor (2) nach Anspruch 1 oder 2, wobei die Partikel Nanopartikel sind.

4. Kapazitiver Drucksensor (2) nach einem der vorangehenden Ansprüche, wobei die Deckschicht (12) das druckempfindliche Material (10) enthält, insbesondere aus dem druckempfindlichen Material (10) besteht.

5. Batteriemodul mit einer Batteriezelle, insbesondere einer Pouch-Zelle,
**gekennzeichnet durch** einen kapazitiven Drucksensor (2) nach einem der Ansprüche 1 bis 4, der zur Überwachung eines Batteriezellendrucks der Batteriezelle ausgebildet und eingerichtet ist.

6. Batteriemodul nach Anspruch 5 wobei der Drucksensor (2) an einer Außenhülle der Batteriezelle angeordnet ist, insbesondere wobei die Außenhülle der Batteriezelle die flexible Trägerschicht (4) des Drucksensors ausbildet.

7. Verfahren zur Herstellung eines kapazitiven Drucksensors (2), insbesondere eines Drucksensors (2) nach einem der Ansprüche 1 bis 4 umfassend folgende Schritte:
- Aufdrucken zweier kammartig ineinandergreifender Elektroden (8a, 8b) auf eine Trägerschicht (4);
- vor dem Auftragen des druckempfindlichen Materials (10) auf die Trägerschicht (4) ein nicht an die Elektroden (8a, 8b) angrenzender Bereich auf einer den Elektroden (8a, 8b) zugewandten Seite der Trägerschicht (4) zur Ausbildung einer oder mehrerer Vertiefungen (14) teilweise abgetragen wird,
- Auftragen, insbesondere Aufdrucken, des druckempfindlichen Materials (10), das aus einem dielektrischen Material gebildet ist, das isoliert zueinander angeordnete Partikel mit anderer Permittivität als das dielektrische Material und/oder Cluster derartiger Partikel enthält, auf die Trägerschicht (4) zwischen die Elektroden (8a, 8b);
- Herstellen einer Deckschicht (12).

8. Verfahren nach Anspruch 7, wobei das Herstellen der Deckschicht (12) ein Auftragen weiteren druckempfindlichen Materials (10) auf die Elektroden (8a, 8b) und das zwischen den Elektroden (8a, 8b) angeordnete druckempfindliche Material (10) ist.

9. Verfahren nach Anspruch 7 oder 8, wobei der nicht an die Elektroden (8a, 8b) angrenzende Bereich auf der den Elektroden (8a, 8b) zugewandten Seite der Trägerschicht (4) zur Ausbildung einer oder mehrerer Vertiefungen (14) laser-ablatiert oder verformt, vorzugsweise geprägt, wird.

## Claims

1. Capacitive pressure sensor (2) with
a flexible carrier layer (4),
a sensor layer (6) arranged on the carrier layer (4),
wherein an interdigital electrode (8) is arranged within the sensor layer (6), which has two electrodes (8a, 8b) printed on the carrier layer (4) and interlocking in a comb-like manner,
wherein within the sensor layer (6) between the electrodes (8a, 8) a pressure-sensitive material (10) is arranged,
which is formed from a compressible dielectric material,
which contains particles arranged in isolation from each other with a permittivity different from that of the dielectric material and/or clusters of such particles,
and a top layer (12) arranged on the sensor layer (6) to protect the electrodes (8a, 8b),
**characterized by** the fact that
the carrier layer (4) has one or more depressions (14) on one side facing the sensor layer (6) in an area not adjacent to the electrodes (8a, 8b) in which the pressure-sensitive material (10) is arranged.

2. A capacitive pressure sensor (2) according to claim 1, wherein the particles are conductive, preferably a metal, preferably containing silver, copper and/or iron.

3. A capacitive pressure sensor (2) according to claim 1 or 2, wherein the particles are nanoparticles.

4. Capacitive pressure sensor (2) according to any of the preceding claims, wherein the surface layer (12) contains the pressure-sensitive material (10), in particular consists of the pressure-sensitive material (10).

5. Battery module with a battery cell, especially a pouch cell, **Marked by** A capacitive pressure sensor (2) according to any one of claims 1 to 4, which is designed and equipped for monitoring a battery cell pressure of the battery cell.

6. The battery module according to claim 6, wherein the pressure sensor (2) is arranged on an outer shell of the battery cell, in particular wherein the outer shell of the battery cell forms the flexible carrier layer (4) of the pressure sensor.

7. A method for the manufacture of a capacitive pressure sensor (2), in particular a pressure sensor (2) according to any one of claims 1 to 5, comprising the following steps:
- Printing of two comb-like interlocking electrodes (8a, 8b) on a carrier layer (4);
- before the pressure-sensitive material (10) is applied to the carrier layer (4), an area not adjacent to the electrodes (8a, 8b) on one side of the carrier layer (4) facing the electrodes (8a, 8b) is partially removed to form one or more depressions (14),
- Application, in particular printing, of a pressure-sensitive material (10) consisting of a dielectric material containing particles isolated from each other with permittivity other than the dielectric material and/or clusters of such particles on the support layer (4) between the electrodes (8a, 8b);
- Preparation of a surface layer (12).

8. The method of claim 7, wherein the preparation of the surface layer (12) is an application of further pressure-sensitive material (10) to the electrodes (8a, 8b) and the pressure-sensitive material (10) arranged between the electrodes (8a, 8b).

9. A method according to claim 7 or 8, wherein the region not adjacent to the electrodes (8a, 8b) on the side of the carrier layer (4) facing the electrodes (8a, 8b) is laser-ablated or deformed, preferably embossed, for the formation of one or more wells (14).

## Revendications

1. Capteur de pression capacitive (2) avec
une couche porteuse flexible (4),
une couche capteur (6) disposée sur la couche porteuse (4),
où une électrode internumérique (8) est disposée dans la couche capteur (6),
qui possède deux électrodes (8a, 8b) imprimées sur la couche porteuse (4) et s'entrelacent de manière peignée,
où, dans la couche capteur (6) entre les électrodes (8a, 8), un matériau sensible à la pression (10) est disposé,
qui est formé à partir d'un matériau diélectrique compressible,
qui contient des particules disposées isolément les unes des autres avec une permittivité différente de celle du matériau diélectrique et/ou des amas de ces particules,
et une couche supérieure (12) disposée sur la couche capteur (6) pour protéger les électrodes (8a, 8b),
**caractérisée par le fait que**
La couche porteuse (4) présente une ou plusieurs dépressions (14) d'un côté face à la couche capteur (6) dans une zone non adjacente aux électrodes (8A, 8B) où le matériau sensible à la pression (10) est disposé.

2. Un capteur de pression capacitif (2) selon la revendication 1, dans lequel les particules sont conductrices, de préférence un métal, de préférence contenant de l'argent, du cuivre et/ou du fer.

3. Un capteur de pression capacitive (2) selon la revendication 1 ou 2, où les particules sont des nanoparticules.

4. Le capteur de pression capacitive (2) selon l'une des affirmations précédentes, où la couche de surface (12) contient le matériau sensible à la pression (10), en particulier constitue le matériau sensible à la pression (10).

5. Module batterie avec une cellule de batterie, en particulier une cellule de poche, **Marqué par** Un capteur de pression capacitive (2) selon l'une des revendications 1 à 4, conçu et équipé pour surveiller la pression d'une cellule de batterie de la cellule.

6. Le module de batterie selon la revendication 6, où le capteur de pression (2) est disposé sur une coque extérieure de la cellule de batterie, en particulier où la couche extérieure forme la couche porteuse flexible (4) du capteur de pression.

7. Une méthode pour la fabrication d'un capteur de pression capacitif (2), en particulier un capteur de pression (2) selon l'une des revendications 1 à 5, comprenant les étapes suivantes :
- Impression de deux électrodes entrelacées en forme de peigne (8a, 8b) sur une couche porteuse (4) ;
- avant que le matériau sensible à la pression (10) ne soit appliqué sur la couche porteuse (4), une zone non adjacente aux électrodes (8a, 8b) d'un côté de la couche porteuse (4) faisant face aux électrodes (8a, 8b) est partiellement retirée pour former une ou plusieurs dépressions (14),
- L'application, en particulier l'impression, d'un matériau sensible à la pression (10) constitué d'un matériau diélectrique contenant des particules isolées les unes des autres avec une permittivité autre que le matériau diélectrique et/ou des groupes de ces particules sur la couche de support (4) entre les électrodes (8a, 8b) ;
- Préparation d'une couche de surface (12).

8. La méthode de la revendication 7, dans laquelle la préparation de la couche de surface (12) consiste à appliquer un matériau sensible à la pression supplémentaire (10) aux électrodes (8a, 8b) et au matériau sensible à la pression (10) disposés entre les électrodes (8a, 8b).

9. Une méthode selon la revendication 7 ou 8, dans laquelle la région non adjacente aux électrodes (8a, 8b) sur le côté de la couche porteuse (4) faisant face aux électrodes (8a, 8b) est ablée au laser ou déformée, de préférence embossée, pour la formation d'un ou plusieurs puits (14).
